# EUROPÄISCHE PATENTANMELDUNG

(11) **EP 2 682 288 A1**
(43) Veröffentlichungstag der Anmeldung: **08.01.2014**
(21) Anmeldenummer: 12174790.1
(22) Anmeldetag: 03.07.2012
(51) Int. Cl.: B60C 17/06, B60C 17/10

(54) **Kraftfahrzeugrad**

(71) Anmelder: Europlast-Nycast GmbH, 40882 Ratingen-Homberg (DE)
(72) Erfinder: Seelig, Hans-Georg, 45149 Essen (DE); Orth, Michael, 45481 Mülheim an der Ruhr (DE)
(74) Vertreter: DR. STARK & PARTNER

(57) **Zusammenfassung**

Die Erfindung betrifft ein Kraftfahrzeugrad (1) mit einer Felge (2) mit einem Felgenbett (13), mit einem luftgefüllten Reifen (3), der eine Lauffläche (4) und beidseitig jeweils eine Reifenwulst (5) hat und mit diesen beiden Reifenwülsten auf der Felge (2) angeordnet ist, und mit einem innerhalb des Reifens (2) auf der Felge (2) angeordneten verspannbaren Notlaufeinsatz (6), wobei der Notlaufeinsatz wenigstens zwei, insbesondere drei, kreisringsegmentförmige Teilelemente hat, von denen aneinandergrenzende Teilelemente jeweils entweder gelenkig miteinander verbunden sind oder über ein Spannsystem miteinander verspannbar sind, wobei Gleitmittel (11, 12)Schlupfbewegungen fördern und somit die Reibung reduzieren sollen, so dass die Entstehung von Reibwärme vermindert wird.

Für eine besser Umweltverträglichkeit sollen alternative Gleitmittel eingesetzt werden.

## Beschreibung

Die Erfindung betrifft ein Kraftfahrzeugrad mit einer Felge mit einem Felgenbett, mit einem luftgefüllten Reifen, der eine Lauffläche und beidseitig jeweils eine Reifenwulst hat und mit diesen beiden Reifenwülsten auf der Felge angeordnet ist, und mit einem innerhalb des Reifens auf der Felge angeordneten verspannbaren Notlaufeinsatz, wobei der Notlaufeinsatz wenigstens zwei, insbesondere drei, kreisringsegmentförmige Teilelemente hat, von denen aneinandergrenzende Teilelemente jeweils entweder gelenkig miteinander verbunden sind oder über ein Spannsystem miteinander verspannbar sind.

Aus der Praxis sind derartige Notlaufeinsätze bekannt, bei denen es im Beschädigungsfall des Reifens, wenn dieser drucklos ist, unter dem Belastungsdruck und der Fahrbewegung sowohl zwischen der Innenseite des Reifens und der Außenfläche des Notlaufeinsatzes als auch zwischen der Innenfläche des Notlaufeinsatzes und der Oberfläche der Felge zu Relativ- und Schlupfbewegungen kommt.

Diese Relativ- und Schlupfbewegungen verursachen Reibung an den entsprechenden Berührungsflächen, wodurch dann dort Wärme entsteht, die zur Zerstörung des Notlaufeinsatzes führen kann. Zur Reduzierung der Wärmeentstehung werden in der Praxis Gleitmittel eingesetzt, welche Schlupfbewegungen fördern und somit die Reibung reduzieren. Damit wird auch die Entstehung von Reibwärme vermindert.

Als Gleitmittel werden hierfür bisher üblicherweise Fette eingesetzt, die jedoch eher nicht oder nur bedingt umweltverträglich sind.

Aufgabe der Erfindung ist es, die vorgenannten Nachteile zu vermeiden.

Diese Aufgabe wird dadurch gelöst, dass der Querschnitt der Teilelemente reifenseitig T-förmig ausgebildet ist, wobei der Querbalken der T-förmigen Ausgestaltung als Lauffläche für den Reifen bei einem Reifendefekt dient und der Querschnitt der Teilelemente felgenseitig eine Form mit zwei seitlichen Endpunkten aufweist, die zur Montage auf dem Felgenbett dienen und in montiertem Zustand auf diesem aufliegen, wobei die T-förmige Ausgestaltung und die Form, insbesondere über einen radial verlaufenden Steg, miteinander verbunden sind, wobei ein Gleitmittel zumindest vorgesehen ist an:
- der Innenseite des Reifens zumindest in dem innenseitigen Bereich der Reifenwülste und/oder
- der Innenseite des Reifens zumindest in dem innenseitigen Bereich der Lauffläche und/oder
- dem als Lauffläche für den Reifen bei einem Reifendefekt dienenden Bereich des Querbalkens der T-förmigen Ausgestaltung und/oder
- dem felgenseitigen Bereich der Form mit zwei seitlichen Endpunkten der Teilelemente und/oder
- dem seitlichen Bereich der Form mit zwei seitlichen Endpunkten der Teilelemente und/oder
- dem Felgenbett,
wobei als Gleitmittel verwendet wird:
- ein puderförmiges Produkt, bestehend aus Talkum oder aus einem auf Talkum basierenden Produkt oder aus einem Talkum aufweisenden Produkt, oder
- ein pastöses Produkt, bestehend aus PTFE oder aus einem auf PTFE basierenden Produkt oder aus einem PTFE aufweisenden Produkt oder
- ein pastöses Produkt, bestehend aus Polyolefin oder aus einem auf einem Polyolefin basierenden Produkt oder aus einem zumindest ein Polyolefin aufweisenden Produkt.

Hierdurch wird die Reibung bei Relativ- und Schlupfbewegungen an den entsprechenden Berührungsflächen reduziert, wodurch auch die Wärmeentstehung vermindert wird. Die Gefahr einer Beeinträchtigung, insbesondere Beschädigung oder gar Zerstörung des Notlaufeinsatzes wird damit deutlich reduziert oder sogar ausgeräumt.

Nachteile für die Umwelt werden durch die verwendeten Gleitmittel vermindert, da diese umweltverträglich und biologisch abbaubar sind.

Vorzugsweise kann das puderförmige Produkt neben Talkum auch Chlorit und/oder Magnesit und/oder Dolomit und/oder Quarz umfassen.

Weiterhin kann das puderförmige Produkt ca. 50 % Talkum und/oder 40 % Chlorit und/oder ca. 6 % Magnesit und/oder bis 4 % Dolomit und/oder bis 4 % Quarz umfassen.

Bei einem bevorzugten Ausführungsbeispiel der Erfindung kann das pastöse Produkt entweder neben PTFE oder neben Polyolefin auch weißes Öl und/oder Polybutene und/oder keramische Bestandteile und deren Verbindungsmittel umfassen.

Auch kann das pastöse Produkt ca. 5 % weißes Öl und/oder 8 % Polybutene und/oder ca. 87 % keramische Bestandteile und deren Verbindungsmittel umfassen.

Dabei können die keramischen Bestandteile Aluminiumoxid und/oder Siliziumkarbid und/oder Siliziumsulfat und/oder Calciumdioxid umfassen.

Erfindungsgemäß können die Polybutene vorwiegend aus Ethlyenen und Isomeren bestehen.

Vorteilhafterweise kann das pastöse Produkt eine Dichte von 1,14 gr/ml und/oder einen Reibungskoeffizient von 0,12 aufweisen.

Erfindungsgemäß kann das pastöse Produkt als Paste ausgebildet sein, so dass eine gute Bevorratung und insbesondere auch ein Transport per Flugzeug, bei dem keine Spraydosen verwendet werden sollen, möglich ist. Vorteilhafterweise kann das Gleitmittel als Spray ausgebildet sein, so dass eine besondere einfache Applikation auch an schlecht zugänglichen Stellen möglich ist.

Vorzugsweise kann das puderförmige Produkt eine Dichte von 0,89 gr/ml und/oder einen Reibungskoeffizient von 0,12 aufweisen.

Bei einem bevorzugten Ausführungsbeispiel der Erfindung kann der felgenseitige Bereich der Teilelemente zwischen den zwei seitlichen Endpunkten der Teilelemente eine der Felge zugewandte konkave Form aufweisen.

Erfindungsgemäß kann/können die Innenseite des Reifens zumindest in dem innenseitigen Bereich der Reifenwülste und/oder der als Lauffläche für den Reifen bei einem Reifendefekt dienende Bereich des Querbalkens der T-förmigen Ausgestaltung und/oder der felgenseitige Bereich der Form mit zwei seitlichen Endpunkten der Teilelemente und/oder der seitliche Bereich der Form mit zwei seitlichen Endpunkten der Teilelemente und/oder das Felgenbett mit einem Gleitmittel, das als pastöses Produkt ausgebildet ist, versehen sein.

Auch kann die Innenseite des Reifens zumindest in dem innenseitigen Bereich der Lauffläche mit einem Gleitmittel, das als puderförmiges Produkt ausgebildet ist, versehen sein.

Im Folgenden werden in den Zeichnungen dargestellte Ausführungsbeispiele der Erfindung erläutert. Es zeigen:
- Fig. 1: ein erstes Ausführungsbeispiel eines erfindungsgemäßen Kraftfahrzeugrades und
- Fig. 2: ein zweites Ausführungsbeispiel eines erfindungsgemäßen Kraftfahrzeugrades.

In allen Figuren werden für gleiche bzw. gleichartige Bauteile übereinstimmende Bezugszeichen verwendet.

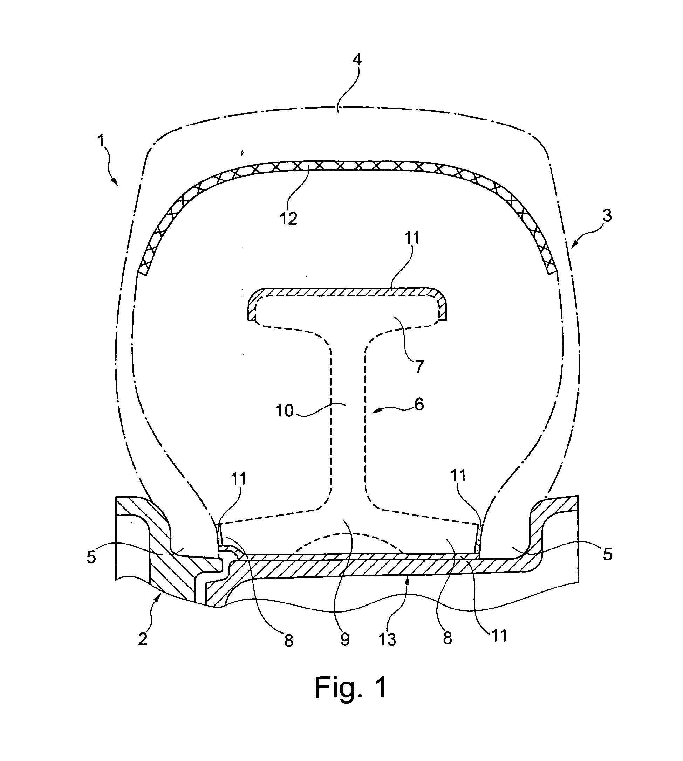

Fig. 1 zeigt ein Kraftfahrzeugrad 1 mit einer Felge 2 mit einem Felgenbett 13, die im dargestellten Ausführungsbeispiel als Flachbettfelge ausgebildet ist.

Das Kraftfahrzeugrad 1 umfasst weiterhin einen luftgefüllten Reifen 3, der eine Lauffläche 4 und beidseitig jeweils eine Reifenwulst 5 hat. Mit diesen beiden Reifenwülsten 5 ist der Reifen 3 auf der Felge 2 angeordnet.

Innerhalb des Reifens 3 ist ein auf der Felge 2 angeordneter verspannbarer Notlaufeinsatz 6 vorgesehen, der wenigstens zwei, insbesondere drei, kreisringsegmentförmige Teilelemente hat. Die jeweils aneinandergrenzenden Teilelemente sind dabei jeweils entweder gelenkig miteinander verbunden oder über ein Spannsystem miteinander verspannbar (in der Zeichnung nicht dargestellt).

Der Querschnitt der Teilelemente des Notlaufeinsatzes 6 ist reifenseitig T-förmig ausgebildet, wobei der Querbalken der T-förmigen Ausgestaltung als Lauffläche 7 für den Reifen 3 bei einem Reifendefekt dient. Felgenseitig weist der Querschnitt der Teilelemente des Notlaufeinsatzes 6 eine Form mit einer der Felge zugewandten konkaven Form 9 mit zwei seitlichen Endpunkten 8 auf, die zur Montage auf dem Felgenbett 13 dienen und in montiertem Zustand auf diesem aufliegen.

Die T-förmige Ausgestaltung der Lauffläche 7 und die Form sind über einen radial verlaufenden Steg 10 miteinander verbunden.

An der Innenseite des Reifens 3 ist in dem innenseitigen Bereich der Reifenwülste 5 ein erstes Gleitmittel 11 vorgesehen, welches ein pastöses Produkt ist. Dieses besteht entweder als erste Alternative aus PTFE oder aus einem auf PTFE basierenden Produkt oder aus einem PTFE aufweisenden Produkt und/oder als zweite Alternative aus Polyolefin oder aus einem auf einem Polyolefin basierenden Produkt oder aus einem zumindest ein Polyolefin aufweisenden Produkt.

An der Innenseite des Reifens 3 ist in dem innenseitigen Bereich der Lauffläche 4 ein zweites Gleitmittel 12 vorgesehen, welches ein puderförmiges Produkt, bestehend aus Talkum oder aus einem auf Talkum basierenden Produkt oder aus einem Talkum aufweisenden Produkt ist.

An dem als Lauffläche 7 für den Reifen 3 bei einem Reifendefekt dienenden Bereich des Notlaufeinsatzes 6 ist ebenfalls das erste Gleitmittel 11 vorgesehen, genauso wie an dem felgenseitigen Bereich der konkaven Form 9 mit den zwei seitlichen Endpunkten 8 der Teilelemente des Notlaufeinsatzes 6 und dem Felgenbett 13 der Felge 2.

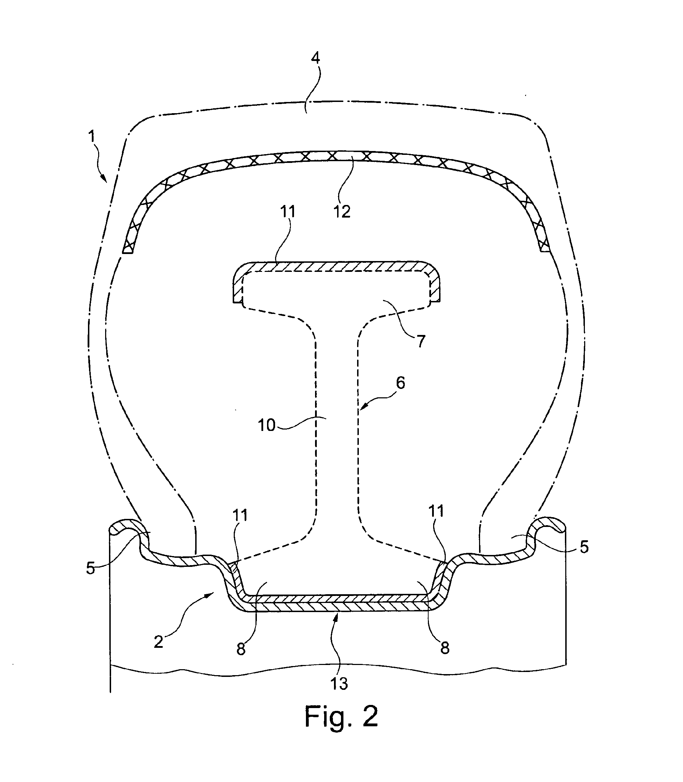

Fig. 2 zeigt ein alternatives Ausführungsbeispiel eines Kraftfahrzeugrads 1 mit einer Felge 2 mit einem Felgenbett 13, wobei hier die dargestellte Felge 2 als Tiefbettfelge ausgebildet ist. Felgenseitig weist der Querschnitt der Teilelemente des Notlaufeinsatzes 6 eine Form mit einer der Felge 2 zugewandten Form mit zwei seitlichen Endpunkten 8 auf, die zur Montage in dem vertieften Bereich des Felgenbettes 13 dienen und in montiertem Zustand in diesem aufliegen. Ein Gleitmittel an der Innenseite des Reifens 3 in dem innenseitigen Bereich der Reifenwülste 5 ist daher nicht erforderlich, da dort kein Kontakt mit dem Notlaufeinsatz 6 gegeben ist.

## Patentansprüche

1. Kraftfahrzeugrad (1) mit einer Felge (2) mit einem Felgenbett (13), mit einem luftgefüllten Reifen (3), der eine Lauffläche (4) und beidseitig jeweils eine Reifenwulst (5) hat und mit diesen beiden Reifenwülsten (5) auf der Felge (2) angeordnet ist, und mit einem innerhalb des Reifens (3) auf der Felge (2) angeordneten verspannbaren Notlaufeinsatz (6), wobei der Notlaufeinsatz (6) wenigstens zwei, insbesondere drei, kreisringsegmentförmige Teilelemente hat, von denen aneinandergrenzende Teilelemente jeweils entweder gelenkig miteinander verbunden sind oder über ein Spannsystem mit-einander verspannbar sind, **dadurch gekennzeichnet, dass** der Querschnitt der Teilelemente reifenseitig T-förmig ausgebildet ist, wobei der Querbalken der T-förmigen Ausgestaltung als Lauffläche (7) für den Reifen (3) bei einem Reifendefekt dient und der Querschnitt der Teilelemente felgenseitig eine Form mit zwei seitlichen Endpunkten (8) aufweist, die zur Montage auf dem Felgenbett (13) dienen und in montiertem Zustand auf diesem aufliegen, wobei die T-förmige Ausgestaltung und die Form, insbesondere über einen radial verlaufenden Steg (10), miteinander verbunden sind, wobei ein Gleitmittel (11, 12) zumindest vorgesehen ist an:
- der Innenseite des Reifens (3) zumindest in dem innenseitigen Bereich der Reifenwülste (5) und/oder
- der Innenseite des Reifens (3) zumindest in dem innenseitigen Bereich der Lauffläche (4) und/oder
- dem als Lauffläche (7) für den Reifen (3) bei einem Reifendefekt dienenden Bereich des Querbalkens der T-förmigen Ausgestaltung und/oder
- dem felgenseitigen Bereich der Form mit zwei seitlichen Endpunkten (8) der Teilelemente und/oder
- dem seitlichen Bereich der Form mit zwei seitlichen Endpunkten (8) der Teilelemente und/oder
- dem Felgenbett (13),
wobei als Gleitmittel (11, 12) verwendet wird:
- ein puderförmiges Produkt (12), bestehend aus Talkum oder aus einem auf Talkum basierenden Produkt oder aus einem Talkum aufweisenden Produkt, oder
- ein pastöses Produkt (11), bestehend aus PTFE oder aus einem auf PTFE basierenden Produkt oder aus einem PTFE aufweisenden Produkt oder
- ein pastöses Produkt (11), bestehend aus Polyolefin oder aus einem auf einem Polyolefin basierenden Produkt oder aus einem zumindest ein Polyolefin aufweisenden Produkt.

2. Kraftfahrzeugrad (1) nach dem vorhergehenden Anspruch, **dadurch gekennzeichnet, dass** das puderförmige Produkt (12) neben Talkum auch Chlorit und/oder Magnesit und/oder Dolomit und/oder Quarz umfasst.

3. Kraftfahrzeugrad (1) nach dem vorhergehenden Anspruch, **dadurch gekennzeichnet, dass** das puderförmige Produkt (12) ca. 50 % Talkum und/oder 40 % Chlorit und/oder ca. 6 % Magnesit und/oder bis 4 % Dolomit und/oder bis 4 % Quarz umfasst.

4. Kraftfahrzeugrad (1) nach einem der vorhergehenden Ansprüche, **dadurch gekennzeichnet, dass** das pastöse Produkt (11) entweder neben PTFE oder neben Polyolefin auch weißes Öl und/oder Polybutene und/oder keramische Bestandteile und deren Verbindungsmittel umfasst.

5. Kraftfahrzeugrad (1) nach dem vorhergehenden Anspruch, **dadurch gekennzeichnet, dass** das pastöse Produkt (11) ca. 5 % weißes Öl und/oder 8 % Polybutene und/oder ca. 87 % keramische Bestandteile und deren Verbindungsmittel umfasst.

6. Kraftfahrzeugrad (1) nach Anspruch 4 oder 5, **dadurch gekennzeichnet, dass** die keramischen Bestandteile Aluminiumoxid und/oder Siliziumkarbid und/oder Siliziumsulfat und/oder Calciumdioxid umfassen.

7. Kraftfahrzeugrad (1) nach einem der Ansprüche 4 bis 6, **dadurch gekennzeichnet, dass** die Polybutene vorwiegend aus Ethlyenen und Isomeren bestehen.

8. Kraftfahrzeugrad (1) nach einem der vorhergehenden Ansprüche, **dadurch gekennzeichnet, dass** das pastöse Produkt (11) eine Dichte von 1,14 gr/ml und/oder einen Reibungskoeffizient von 0,12 aufweist.

9. Kraftfahrzeugrad (1) nach einem der vorhergehenden Ansprüche, **dadurch gekennzeichnet, dass** das pastöse Produkt (11) als Paste ausgebildet ist.

10. Kraftfahrzeugrad (1) nach einem der vorhergehenden Ansprüche, **dadurch gekennzeichnet, dass** das Gleitmittel (11, 12) als Spray ausgebildet ist.

11. Kraftfahrzeugrad (1) nach einem der vorhergehenden Ansprüche, **dadurch gekennzeichnet, dass** das puderförmige Produkt (12) eine Dichte von 0,89 gr/ml und/oder einen Reibungskoeffizient von 0,12 aufweist.

12. Kraftfahrzeugrad (1) nach einem der vorhergehenden Ansprüche, **dadurch gekennzeichnet, dass** der felgenseitige Bereich der Teilelemente zwischen den zwei seitlichen Endpunkten (8) der Teilelemente eine der Felge (2) zugewandte konkave Form (9) aufweist.

13. Kraftfahrzeugrad (1) nach einem der vorhergehenden Ansprüche, **dadurch gekennzeichnet, dass** die Innenseite des Reifens (3) zumindest in dem innenseitigen Bereich der Reifenwülste (5) und/oder der als Lauffläche (7) für den Reifen (3) bei einem Reifendefekt dienende Bereich des Querbalkens der T-förmigen Ausgestaltung und/oder der felgenseitige Bereich der Form mit zwei seitlichen Endpunkten (8) der Teilelemente und/oder der seitliche Bereich der Form mit zwei seitlichen Endpunkten (8) der Teilelemente und/oder das Felgenbett (13) mit einem Gleitmittel (11, 12), das als pastöses Produkt (11) ausgebildet ist, versehen sind.

14. Kraftfahrzeugrad (1) nach einem der vorhergehenden Ansprüche, **dadurch gekennzeichnet, dass** die Innenseite des Reifens (3) zumindest in dem innenseitigen Bereich der Lauffläche (4) mit einem Gleitmittel (11, 12), das als puderförmiges Produkt (12) ausgebildet ist, versehen ist.
